# EUROPEAN PATENT APPLICATION

(11) **EP 1 703 415 A1**
(43) Date of publication of application: **20.09.2006**
(21) Application number: 04820524.9
(22) Date of filing: 08.12.2004
(51) Int. Cl.: G06F 17/21, G06F 17/24

(54) **DEVICE FOR CREATING SENTENCE HAVING DECORATION INFORMATION**

(30) Priority: 16.12.2003 JP 2003418214
(71) Applicant: SHARP KABUSHIKI KAISHA, Osaka-shi, Osaka 545-8522 (JP)
(72) Inventor: NAKAMURA, Yasuhiro, Midori-ku ,Chiba-shi Chiba 266-0031 (JP)
(74) Representative: Müller, Frithjof E.
(86) International application number: PCT/JP2004/018284
(87) International publication number: WO 2005/059769

(57) **Abstract**

A device capable of creating a sentence having decoration information with a simple operation. The device includes: an input unit for entering a sentence in text format by a user; a display unit for displaying an image and a sentence in text format; a decoration information table for storing combinations of decoration information; a decoration information detection unit for detecting the optimal combination of decoration information in the decoration information table in accordance with a request from the user; and a decoration information addition unit for adding to a sentence the combination of decoration information detected by the decoration information detection unit. By storing combinations of decoration information in advance and allowing the user to select a theme or the like when entering a sentence, a plurality of items of decoration information can be added to a sentence.

## Description

### TECHNICAL FIELD

The present invention relates to a device for creating a sentence having decoration information. More particularly, it relates to a device for creating a sentence having decoration information that is suitable for displaying a sentence superposed on an image.

### BACKGROUND ART

Conventionally, when decoration information, such as underlines and hatching, is added to a sentence in text format, an operation for adding such decoration information is required in addition to the operation for entering characters. For example, a process for setting decoration information is performed by displaying a character decoration setting screen separately from a character entry screen and selecting a certain character area. Thus, for example, when a plurality of items of decoration information are to be added to a single sentence, the operation becomes complex. JP Patent Publication (Kokai) No. 8-44733 A (1996) proposes a method for simplifying the operation for adding decoration information. In accordance with the example disclosed in this publication, certain decoration information is selected from a plurality of items of decoration information stored in advance and then added to a sentence, whereby the operation can be facilitated.
Patent Document 1: JP Patent Publication (Kokai) No. 8-44733 A (1996)

### DISCLOSURE OF THE INVENTION

In accordance with the conventional method, when to store decoration information, the user needs to create decoration information at least once. Furthermore, when a plurality of items of decoration information are to be added to a sentence, such a sophisticated user interface, as a word processor or a personal computer has, needs to be provided. Such addition has not been possible with mobile terminals, for example.

It is an object of the invention to provide a device for creating a sentence having decoration information that enables the addition of decoration information to a sentence with a simple operation.

It is an object of the invention to provide a device for creating a sentence having decoration information that enables the addition of decoration information to a sentence even with such a simple user interface as a mobile terminal has.

In accordance with the invention, combinations of decoration information are stored in advance and the user selects a theme or the like when entering a sentence, whereby a plurality of items of decoration information can be added to the sentence.

The device for creating a sentence having decoration information according to the invention includes: an input unit with which a user enters a sentence in text format; a display unit for displaying an image and a sentence in text format; a decoration information table for storing combinations of decoration information; a decoration information detection unit for detecting the optimum combination of decoration information in the decoration information table in accordance with a request from the user; and a decoration information addition unit for adding the combination of decoration information detected by the decoration information detection unit to the sentence.

In accordance with the invention, a sentence having decoration information can be created with a simple operation.

### BRIEF DESCRIPTION OF THE DRAWINGS

Fig. 1 shows a configuration of a device for creating a sentence having decoration information according to the invention.
Fig. 2 shows a process for creating a sentence having decoration information, using the device for creating a sentence having decoration information according to the invention.
Fig. 3 shows a process for obtaining decoration information from the outside, using the device for creating a sentence having decoration information according to the invention.
Fig. 4 shows diagrams for explaining the contents of decoration information tables and a transmission destination information storage unit according to the invention.

### EXPLANATION OF REFERENCE NUMERALS

1...input unit, 2...display unit, 3...control unit, 4...decoration information detection unit, 5...transmission destination information detection unit, 6... decoration information addition unit, 7... external input/output device, 8...decoration information analysis/registration unit, 21...theme-specific decoration information table, 22... keyword-specific decoration information table, 23...transmission-destination-specific decoration information table, 24...transmission destination information storage unit

### BEST MODES FOR CARRYING OUT THE INVENION

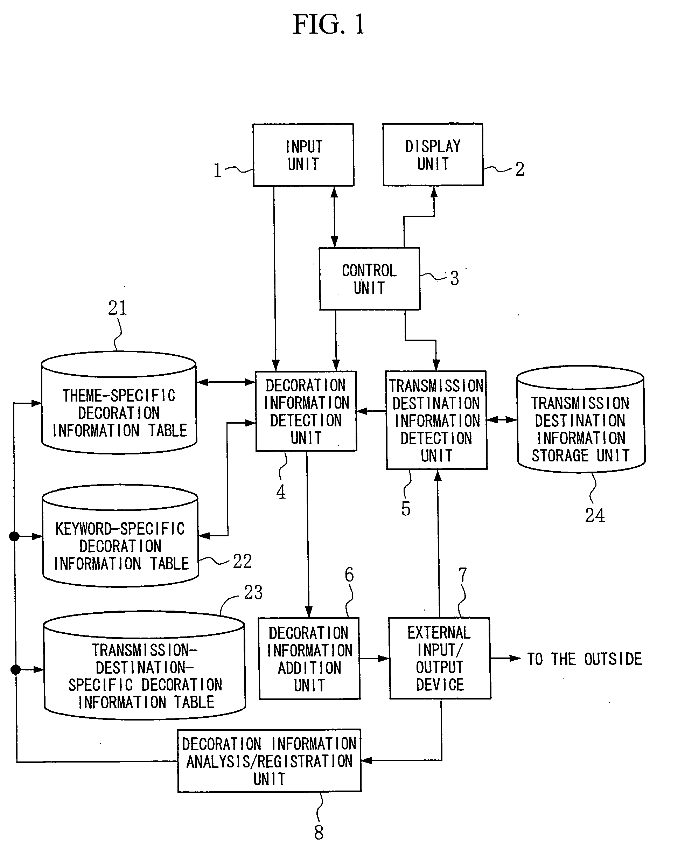

In the following, an embodiment of the invention will be described in detail with reference to the drawings. Fig. 1 shows a block diagram of the configuration of a device for creating a sentence having decoration information according to the invention. The device for creating a sentence having decoration information according to the present embodiment includes: an input unit 1; a display unit 2; a control unit 3; a decoration information detection unit 4; a transmission destination information detection unit 5; a decoration information addition unit 6; an external input/output device 7; a decoration information analysis/registration unit 8; a theme-specific decoration information table 21; a keyword-specific decoration information table 22; a transmission-destination-specific decoration information table 23; and a transmission destination information storage unit 24.

The input unit 1 includes a user interface with which a user enters a sentence or a character string in text format and selects decoration information. It may be a keyboard, operation buttons, a mouse, or the like. The display unit 2 displays an image and a sentence in text format. The control unit 3 makes operation requests and information notification to individual components in the device for creating a sentence having decoration information. The decoration information detection unit 4 refers to the theme-specific decoration information table 21, the keyword-specific decoration information table 22, or the transmission-destination-specific decoration information table 23, so as to detect the optimum combination of decoration information. The transmission destination information detection unit 5 refers to the transmission destination information storage unit 24, so as to detect information about a transmission destination. The decoration information addition unit 6 adds the combination of decoration information detected by the decoration information detection unit 4 to a sentence. The external input/output device 7 transmits and receives files or data to and from an external device. The decoration information analysis/registration unit 8 analyzes decoration information in data transmitted from the external device and registers the analyzed information in the theme-specific decoration information table 21, the keyword-specific decoration information table 22, and the transmission-destination-specific decoration information table 23.

The theme-specific decoration information table 21 stores combinations of decoration information by theme. The keyword-specific decoration information table 22 stores combinations of decoration information by keyword. The transmission-destination-specific decoration information table 23 stores combinations of decoration information by transmission destination. These tables 21, 22, and 23 each include three storage units: a pre-registration unit for storing decoration information in advance; a user storage unit in which the user stores new decoration information; and an external information storage unit for storing decoration information obtained from the outside.

Decoration information will be described in the following. The decoration information assumed in the invention refers to all kinds of decorations that can be added to characters. Thus, it includes the character color, background color, character style (bold type, italic, underline, and strike-through), character size, high light, blink, scrolling, and pictographic characters. Pictographic characters are handled as decoration information associated with a sentence (words).

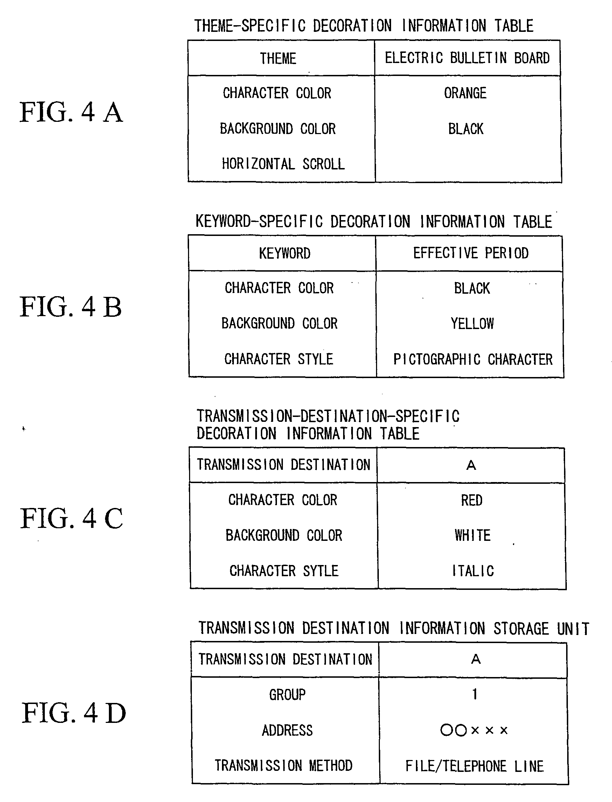

As shown in Fig. 4A, the theme-specific decoration information table 21 stores combinations of decoration information such as, for example, "character color" being "orange," "background color" being "black," and "horizontal scroll" for a theme "electric bulletin board." Thus, if the user selects, for example, "electric bulletin board" as a "theme" and enters a sentence "Here is news for you," the sentence "Here is news for you" is displayed in orange on a black background with horizontal scrolling. Such text with the decoration information can be multiplexed with an image signal, for example, whereby the sentence "Here is news for you" can be displayed with scrolling on an image.

As shown in Fig. 4B, the keyword-specific decoration information table 22 stores combinations of decoration information such as, for example, "character color" being "black," "background color" being "yellow," and "character style" being "pictographic characters" for a keyword "effective period." Thus, if the user selects, for example, "effective period" as a "keyword" and enters a sentence "Effective period has expired", the sentence "Effective period has expired" is displayed in black on a yellow background in ornamental letters. Such text with the decoration information can be multiplexed with an image signal, for example, whereby the sentence "Effective period has expired" can be displayed on an image.

As shown in Fig. 4C, the transmission-destination-specific decoration information table 23 stores combinations of decoration information such as, for example, "character color" being "red," "background color" being "white," and "character style" being "italic" for a "transmission destination" of "A." Thus, if the user selects "A" as a "transmission destination" and enters a sentence "Please send me your reply", the sentence "Please send me your reply" is displayed in red on a white background in italic. Such text with the decoration information can be multiplexed with an image signal, for example, whereby the sentence "Please send me your reply" will be displayed on an image.

As shown in Fig. 4D, the transmission destination information storage unit 24 stores destinations to which the user transmits a sentence having decoration information, group numbers to which transmission destinations belong, mail addresses (telephone numbers), transmission methods, and the like, thereby functioning as an address book. The user sets the group numbers by category such as friends, office, and hobbies.

In accordance with the present embodiment, as described in the following, the user can cause the theme-specific decoration information table 21, the keyword-specific decoration information table 22, and the transmission-destination-specific decoration information table 23 to be automatically searched for a combination of decoration information and cause it to be automatically added to a sentence. Alternatively, the user can also enter a combination of decoration information with the input unit 1, and add it to a sentence.

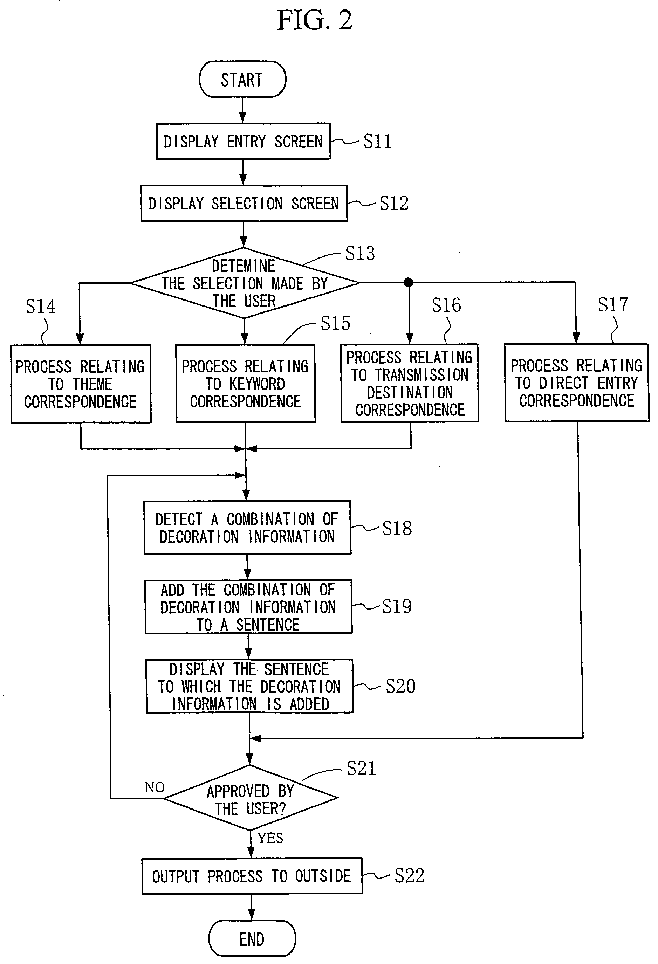

An operation for creating a sentence to which decoration information is automatically added, using the device for creating a sentence having decoration information of the invention, will be described with reference to Fig. 2. At step S11, the control unit 3 causes the display unit 2 to display an entry screen for a "document" and an "applicable range." The "document" is entered in text format. The "applicable range" shows a range in which decoration information is added to a sentence. The "applicable range" may be the full text, lines 1 to 3, page 3, or the like. Once the control unit 3 detects the entry of "document" and "applicable range" by the user, the process proceeds to step S12.

At step S12, the control unit 3 causes the display unit 2 to display a selection screen for a "method for detecting decoration information." Four methods, namely, a "theme correspondence", "keyword correspondence", "transmission destination correspondence", and "direct entry", are displayed as the "method for detecting decoration information." The user is requested to select one of the methods.

At step S13, the control unit 13 determines which method the user has selected among the "theme correspondence", "keyword correspondence", "transmission destination correspondence", and "direct entry." If the "theme correspondence" is selected, the process proceeds to step S14, and if the "keyword correspondence" is selected, the process proceeds to step S15. If the "transmission destination correspondence" is selected, the process proceeds to step S16, and if the "direct entry" is selected, the process proceeds to step S17.

At step S14, a process relating to the "theme correspondence" is carried out. The control unit 3 causes the display unit 2 to display an entry or selection screen for "theme." The user enters or selects a "theme" on the screen. The control unit 3 transmits the "theme" obtained from the user to the decoration information detection unit 4.

At step S 15, a process relating to the "keyword correspondence" is carried out. The control unit 3 causes the display unit 2 to display an entry or selection screen for "keyword." The user enters or selects a "keyword" on the screen. The control unit 3 transmits the "keyword" obtained from the user to the decoration information detection unit 4.

At step S16, a process relating to the "transmission destination correspondence" is carried out. The control unit 3 causes the display unit 2 to display an entry or selection screen for "transmission destination." The user enters or selects a "transmission destination" on the screen. The control unit 3 transmits the "transmission destination" obtained from the user to the decoration information detection unit 4.

In the present embodiment, the "transmission destination" may be entered or selected by the user as described above. Alternatively, it may be detected automatically as described below. First, the transmission destination information detection unit 5 obtains information about a destination from the external input/output device 7. The information about the destination includes a transmission method and the address, telephone number, or the like, of the destination, for example. The transmission method may be based on file output or line output such as for video phone, for example. The transmission destination information detection unit 5 detects a transmission destination via the transmission destination information storage unit 24 based on the information about the destination obtained from the external input/output device 7. The transmission destination information detection unit 5 transmits the transmission destination obtained from transmission destination information storage unit 24 to the decoration information detection unit 4.

At step S17, a process relating to the "direct entry" is carried out. In this case, the user directly enters the selection range for inputted characters and the decoration information all so as to create a text. After the text is created, the process proceeds to step S21.

At step S18, the decoration information detection unit 4 detects a combination of decoration information in the theme-specific decoration information table 21, the keyword-specific decoration information table 22, and the transmission-destination-specific decoration information table 23. If the user selects the "theme correspondence," the theme-specific decoration information table 21 is searched for a combination of decoration information based on the "theme" selected by the user. If the user selects the "keyword correspondence," the keyword-specific decoration information table 22 is searched for a combination of decoration information based on the "keyword" selected by the user. If the user selects the "transmission destination correspondence," the transmission-destination-specific decoration information table 23 is searched for a combination of decoration information based on the "transmission destination" selected by the user or the transmission destination provided via the transmission destination information detection unit 5. The decoration information detection unit 4 provides the detected combination of decoration information to the decoration information addition unit 6.

At step S19, the decoration information addition unit 6 adds the combination of decoration information to the sentence in text format entered by the user. At step S20, the control unit 3 causes the display unit 2 to display the sentence to which the combination of decoration information is added and then asks the user for approval. At step S21, whether or not approval is obtained from the user is determined. If approval is obtained, the process proceeds to step S22. If approval is not obtained, the process goes back to step S 18 so as to detect a combination of decoration information again.

At step S22, the decoration information addition unit 6 outputs the sentence to which the combination of decoration information is added to the external input/output device 7. The external input/output device 7 processes the output of the sentence to which the combination of decoration information is added. For example, if the sentence is to be recorded in a file, a multiplexing process is carried out, and if the sentence is to be transmitted to a line of a video phone, for example, a transmitting process is carried out.

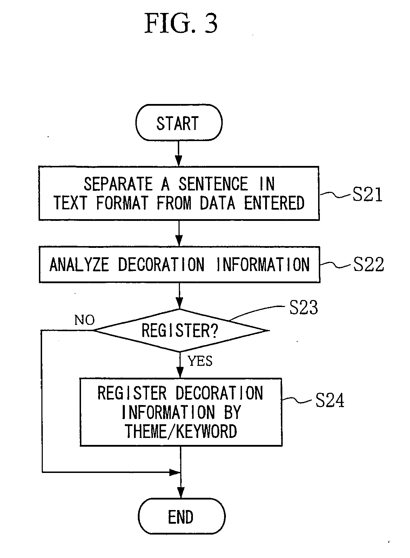

An operation for obtaining decoration information from data obtained from the outside, using the device for creating a sentence having decoration information according to the invention, will be described with reference to Fig. 3. At step S31, the external input/output device 7 separates a sentence in text format from data transmitted from the outside and then transmits the sentence to the decoration information analysis/registration unit 8.

At step 32, the decoration information analysis/registration unit 8 analyzes decoration information contained in the sentence in text format. At step S33, the control unit 3 requests the user to determine "whether or not to register the decoration information obtained from the outside" on the display unit 2. If the instruction "register" from the user is detected, the process proceeds to step S34. If the instruction "register" from the user is not detected, the process comes to an end. At step S34, the decoration information analysis/registration unit 8 stores decoration information obtained from the outside in the user registration unit of the theme-specific decoration information table 21, the keyword-specific decoration information table 22, and the transmission-destination-specific decoration information table 23.

In accordance with the present embodiment, a combination of decoration information can be automatically added to a sentence in a device having a simple user input interface, such as a mobile terminal, by storing combinations of decoration information that are frequently used by the user in the device. Thus, a sentence to which a plurality of items of decoration information are added can be easily created.

In accordance with the present embodiment, a combination of decoration information is automatically selected in accordance with the theme, keyword, and transmission destination selected by the user and added to a sentence. Further, decoration information to be added can be obtained from the outside, thereby facilitating creation of decoration information.

While an embodiment of the invention has been described above, the invention is not limited thereto. It will be understood by those skilled in the art that various changes or modification may be made within the scope of the invention recited in the claims.

## Claims

1. A device for creating a sentence having decoration information, comprising:
an input unit for a user to enter a sentence in text format;
a display unit for displaying an image and a sentence in text format;
a decoration information table for storing combinations of decoration information;
a decoration information detection unit detecting the optimum combination of decoration information in said decoration information table in accordance with a request from the user; and
a decoration information addition unit for adding the combination of decoration information detected by said decoration information detection unit to the sentence.

2. The device for creating a sentence having decoration information according to claim 1, wherein said decoration information table comprises a theme-specific decoration information table for storing combinations of decoration information by theme, and wherein said decoration information detection unit detects a combination of decoration information in said theme-specific decoration information table based on a theme entered by the user.

3. The device for creating a sentence having decoration information according to claim 1, wherein said decoration information table comprises a keyword-specific decoration information table for storing combinations of decoration information by keyword, and wherein said decoration information detection unit detects a combination of decoration information in said keyword-specific decoration information table based on a keyword of a sentence entered by the user.

4. The device for creating a sentence having decoration information according to claim 1, wherein said decoration information table comprises a transmission-destination-specific decoration information table for storing combinations of decoration information by transmission destination, and wherein said decoration information detection unit detects a combination of decoration information in said transmission-destination-specific decoration information table based on a transmission destination entered by the user.

5. The device for creating a sentence having decoration information according to claim 4, further comprising:
a transmission destination information storage unit for storing information about transmission destinations;
an external input/output device for communicating with an external device; and
a transmission destination information detection unit for detecting a transmission destination by referring to said transmission destination information storage unit based on information from said external input/output device,
wherein said decoration information detection unit detects a combination of decoration information in said transmission-destination-specific decoration information table based on a transmission destination obtained by said transmission destination information detection unit.

6. The device for creating a sentence having decoration information according to claim 1, further comprising a decoration information analysis/registration unit for analyzing decoration information in data transmitted from an external device and registering the information in said decoration information table.

7. The device for creating a sentence having decoration information according to claim 1, said decoration information table further comprising:
a pre-registration unit for registering decoration information in advance;
a user registration unit for the user to register new decoration information; and
an external registration unit for registering decoration information transmitted from an external device.
